# EUROPEAN PATENT APPLICATION

(11) **EP 4 700 052 A1**
(43) Date of publication of application: **25.02.2026**
(21) Application number: 25787644.1
(22) Date of filing: 28.03.2025
(51) Int. Cl.: C08F 210/16, C08F 4/659, C08F 4/6592

(54) **HYBRID SUPPORTED METALLOCENE CATALYST AND METHOD FOR PREPARING POLYETHYLENE USING SAME**

(30) Priority: 03.07.2024 KR 20240087705
(71) Applicant: LG Chem, Ltd., Yeoui-daero, Youngdungpo-gu Seoul 07336 (KR)
(72) Inventor: KIM, Byung Seok, Yuseong-gu, Daejeon 34122 (KR); KIM, Seyoung, Yuseong-gu, Daejeon 34122 (KR); KANG, Minyoung, Yuseong-gu, Daejeon 34122 (KR); HAN, Chang Woan, Yuseong-gu, Daejeon 34122 (KR); LIM, Eunjung, Yuseong-gu, Daejeon 34122 (KR); GWON, Donghyeon, Yuseong-gu, Daejeon 34122 (KR); JUNG, Yoonchul, Yuseong-gu, Daejeon 34122 (KR); LEE, Chaeeun, Yuseong-gu, Daejeon 34122 (KR); KIM, Dong Hyun, Yuseong-gu, Daejeon 34122 (KR)
(74) Representative: Hoffmann Eitle
(86) International application number: PCT/KR2025/004012
(87) International publication number: WO 2026/010075

(57) **Abstract**

There are provided a hybrid supported metallocene catalyst useful for producing a polyethylene exhibiting high transparency along with excellent processability, and a method for preparing a polyethylene using the same.

## Description

### [TECHNICAL FIELD]

The present invention relates to a hybrid supported metallocene catalyst useful for producing polyethylene exhibiting high transparency together with excellent processability, and a method for preparing a polyethylene using the same.

### Cross-Reference to Related Applications

This application claims the benefit of priority based on Korean Patent Application No. 10-2024-0087705, filed on July 3, 2024, and all disclosures in the document of the said Korean Patent Application are comprised as a part of this specification.

### [BACKGROUND ART]

Olefin polymerizing catalyst systems can be classified into Ziegler-Natta and metallocene catalyst systems, and these two high-activity catalyst systems have been developed according to their respective characteristics. Ziegler-Natta catalysts have been widely applied to existing commercial processes since their invention in the 1950s. However, since they are multi-site catalysts with multiple coexisting active sites, they have a feature that a resulting polymer has a broad molecular weight distribution, and the uneven composition distribution of the comonomer leads to limitations in securing desired physical properties.

On the other hand, metallocene catalysts include a combination of a main catalyst having a transition metal compound as a main component and an organometallic compound cocatalyst having aluminum as a main component. Such a catalyst is a single-site catalyst which is a homogeneous complex catalyst, and offers a polymer having a narrow molecular weight distribution and a uniform compositional distribution of comonomers, due to the single site characteristics. The stereoregularity, copolymerization characteristics, molecular weight, crystallinity, etc. of the resulting polymer may be controlled by changing a ligand structure of the catalyst and polymerization conditions.

Meanwhile, linear low-density polyethylene (LLDPE) is produced by copolymerizing ethylene and alpha-olefin at low pressure using a polymerizing catalyst, and is a resin with a narrow molecular weight distribution, short chain branches of a certain length, and no long chain branches. The linear low-density polyethylene film has high tensile strength at break and elongation, and excellent tear strength, dart impact strength, etc., in addition to the characteristics of general polyethylene, so its use is increasing in stretch films, overlap films, etc., where the application of existing low density polyethylene or high density polyethylene is difficult.

Recently, with the trend toward decarbonization, there has been a growing demand for high-performance linear low-density polyethylene (LLDPE) with improved recyclability. Alongside this, there is also an increasing need for linear low-density polyethylene with excellent processability and transparency, which are desirable properties for film applications.

However, the linear low-density polyethylene, despite its excellent mechanical properties, has drawbacks such as poor blown film processability and low transparency. A blown film refers to a type of film manufactured by inflating molten plastic with air, and is also referred to as an inflation film.

The linear low-density polyethylene generally exhibits better transparency and higher drop impact strength as its density decreases. However, when a large amount of alpha-olefin comonomer is used to produce low-density polyethylene, issues such as increased fouling in the slurry polymerization process can arise. As a result, in slurry polymerization processes, products with a density of 0.915 g/cm³ or higher are predominantly produced.

When long-chain branches are introduced into LLDPE with a density of 0.915 g/cm³ or higher, it is possible to achieve enhanced processability while maintaining excellent mechanical properties and simultaneously realizing high transparency, and high-value products such as shrink films can be expected with these properties.

### [DETAILED DESCRIPTION OF THE INVENTION]

### [TECHNICAL PROBLEM]

In the present disclosure, there is provided a hybrid supported metallocene catalyst useful for producing a polyethylene exhibiting high transparency along with excellent processability.

In the present disclosure, there is also provided a method for preparing a polyethylene exhibiting high transparency using the hybrid supported metallocene catalyst.

### [TECHNICAL SOLUTION]

In the present disclosure, there is provided a hybrid supported metallocene catalyst including a first transition metal compound represented by the following Chemical Formula 1; a second transition metal compound represented by the following Chemical Formula 2; a cocatalyst; and a support: 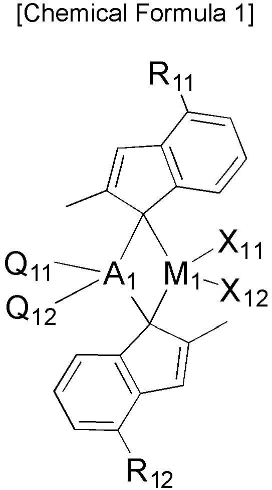 in Chemical Formula 1,
M₁ is a Group 4 transition metal,
X₁₁ and X₁₂ are each independently C₁₋₂₀ alkyl or halogen,
A₁ is carbon, silicon, or germanium,
R₁₁ and R₁₂ are each independently C₆₋₂₀ aryl, C₇₋₂₀ alkylaryl, C₇₋₂₀ arylalkyl, or C₇₋₂₀ alkoxyaryl, and
one of Q₁₁ and Q₁₂ is C₂₋₂₀ alkoxyalkyl, and the other is C₁₋₂₀ alkyl, 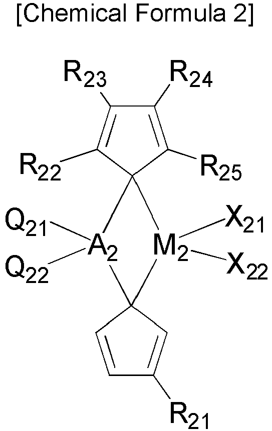
in Chemical Formula 2,
   M₂ is a Group 4 transition metal,
   X₂₁ and X₂₂ are each independently C₁₋₂₀ alkyl or halogen,
   R₂₁ is hydrogen, C₁₋₂₀ alkyl, or C₂₋₂₀ alkoxyalkyl,
   R₂₂ to R₂₅ are each independently hydrogen, C₁₋₂₀ alkyl, C₆₋₂₀ aryl, C₇₋₂₀ alkylaryl, or C₇₋₂₀ arylalkyl,
   Q₂₁ and Q₂₂ are each independently C₁₋₂₀ alkyl or C₂₋₂₀ alkoxyalkyl, and
   one or more of Q₂₁, Q₂₂ and R₂₁ is C₂₋₂₀ alkoxyalkyl.

In addition, there is provided a method for preparing a polyethylene, including a step of polymerizing an ethylene monomer and an alpha-olefin based monomer in the presence of the hybrid supported metallocene catalyst while introducing hydrogen.

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "contain" when used in this specification, specify the presence of stated features, numbers, steps, components, or combinations thereof, but do not preclude the presence or addition of one or more other features, numbers, steps, components, or combinations thereof.

Also, "~" indicating a numerical range in this specification includes both the upper and lower limits of the numerical range. For example, in the case of A~B, it means A or more and B or less.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the hybrid supported metallocene catalyst of the present invention and the method for preparing a polyethylene using the same will be described in detail.

The hybrid supported metallocene catalyst of the present invention includes a first transition metal compound represented by the following Chemical Formula 1; a second transition metal compound represented by the following Chemical Formula 2; a cocatalyst; and a support: 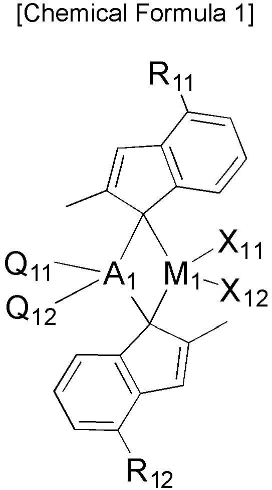 in Chemical Formula 1,
M₁ is a Group 4 transition metal,
X₁₁ and X₁₂ are each independently C₁₋₂₀ alkyl or halogen,
A₁ is carbon, silicon, or germanium,
R₁₁ and R₁₂ are each independently C₆₋₂₀ aryl, C₇₋₂₀ alkylaryl, C₇₋₂₀ arylalkyl, or C₇₋₂₀ alkoxyaryl, and
one of Q₁₁ and Q₁₂ is C₂₋₂₀ alkoxyalkyl, and the other is C₁₋₂₀ alkyl, 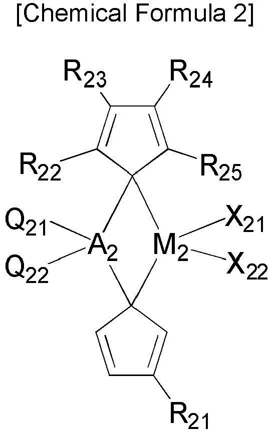
in Chemical Formula 2,
   M₂ is a Group 4 transition metal,
   X₂₁ and X₂₂ are each independently C₁₋₂₀ alkyl or halogen,
   R₂₁ is hydrogen, C₁₋₂₀ alkyl, or C₂₋₂₀ alkoxyalkyl,
   R₂₂ to R₂₅ are each independently hydrogen, C₁₋₂₀ alkyl, C₆₋₂₀ aryl, C₇₋₂₀ alkylaryl, or C₇₋₂₀ arylalkyl,
   Q₂₁ and Q₂₂ are each independently C₁₋₂₀ alkyl or C₂₋₂₀ alkoxyalkyl, and
   one or more of Q₂₁, Q₂₂ and R₂₁ is C₂₋₂₀ alkoxyalkyl.

In the present disclosure, the substituents in the Chemical Formula are explained in more detail as follows.

A halogen may be fluorine (F), chlorine (CI), bromine (Br), or iodine (I).

The C₁₋₂₀ alkyl may be a linear, branched, or cyclic alkyl. Specifically, the C_{1- 20} alkyl may be C₁₋₂₀ linear alkyl; C₁₋₁₀ linear alkyl; C₁₋₅ linear alkyl; C₃₋₂₀ branched or cyclic alkyl; C₃₋₁₅ branched or cyclic alkyl; or C₃₋₁₀ branched or cyclic alkyl. More specifically, the C₁₋₂₀ alkyl may be a methyl group, an ethyl group, an n-propyl group, an iso-propyl group, an n-butyl group, an iso-butyl group, a tert-butyl group, an n-pentyl group, an iso-pentyl group, or a cyclohexyl group.

The C₁₋₂₀ alkoxy may be a linear, branched, or cyclic alkoxy group. Specifically, the C₁₋₂₀ alkoxy may be a C₁₋₂₀ linear alkoxy group; a C₁₋₁₀ linear alkoxy group; a C₁₋₅ linear alkoxy group; a C₃₋₂₀ branched or cyclic alkoxy group; a C₃₋₁₅ branched or cyclic alkoxy group; or a C₃₋₁₀ branched or cyclic alkoxy group. More specifically, the C₁₋₂₀ alkoxy may be a methoxy group, an ethoxy group, an n-propoxy group, an iso-propoxy group, an n-butoxy group, an iso-butoxy group, a tert-butoxy group, an n-pentoxy group, an iso-pentoxy group, a neo-pentoxy group, or a cyclohexyloxy group.

The C₂₋₂₀ alkoxyalkyl may be a substituent having a structure including -R_{y}-O-R_{z}, in which one or more hydrogens of the alkyl (-R_{y}) are substituted with alkoxy (-O-R_{z}). Specifically, the C₂₋₂₀ alkoxyalkyl may include methoxymethyl, methoxyethyl, ethoxymethyl, iso-propoxymethyl, iso-propoxyethyl, iso-propoxyhexyl, tert-butoxymethyl, tert-butoxyethyl, or tert-butoxyhexyl.

The C₆₋₂₀ aryl may be a monocyclic, bicyclic, or tricyclic aromatic hydrocarbon. Specifically, the C₆₋₂₀ aryl may be a phenyl group, a naphthyl group, or an anthracenyl group.

The C₇₋₂₀ alkylaryl may be a substituent where one or more hydrogens of the aryl are substituted with alkyl. Specifically, the C₇₋₂₀ alkylaryl may be methylphenyl, ethylphenyl, n-propylphenyl, iso-propylphenyl, n-butylphenyl, iso-butylphenyl, tert-butylphenyl, di-tert-butylphenyl, or cyclohexylphenyl.

The C₇₋₂₀ arylalkyl may be a substituent where one or more hydrogens of the alkyl are substituted with aryl. Specifically, the C₇₋₂₀ arylalkyl may be a benzyl group, phenylpropyl, or phenylhexyl.

The C₇₋₂₀ alkoxyaryl may be a substituent having a structure including -R_{c}-OR_{d}, in which one or more hydrogens of the aryl (-R_{c}) are substituted with alkoxy (-OR_{d}). Specifically, the C₇₋₂₀ alkoxyaryl may be a methoxyphenyl group, an ethoxyphenyl group, an iso-propoxyphenyl group, or a tert-butoxyphenyl group.

Further, the Group 4 transition metal may be titanium, zirconium, hafnium, etc.

The hybrid supported metallocene catalyst according to the present disclosure is a hybrid catalyst including both a first transition metal compound that enables high copolymerization in the high molecular weight region, and a second transition metal compound that enables low copolymerization in the low molecular weight region.

Specifically, the first transition metal compound represented by Chemical Formula 1 contributes to the formation of a high molecular weight copolymer with a high short-chain branch (SCB) content, while the second transition metal compound represented by Chemical Formula 2 contributes to the formation of a low molecular weight copolymer with a low SCB content.

Accordingly, the hybrid supported metallocene catalyst of the present disclosure exhibits high copolymerization in the high molecular weight region of polyethylene due to the action of the first transition metal compound, while exhibiting low copolymerization in the low molecular weight region due to the action of the second transition metal compound. As a result, the polyethylene produced using the hybrid supported metallocene catalyst according to the present disclosure incorporates long-chain branches (LCB) in the high molecular weight region, thereby exhibiting a higher melt flow rate ratio (MFRR) compared to a polyethylene with a similar density, which leads to excellent processability as well as high transparency.

In the hybrid supported metallocene catalyst according to the present disclosure, the first transition metal compound contributes to the production of a high molecular weight copolymer and exhibits a relatively higher comonomer incorporation rate compared to the second transition metal compound.

Specifically, in Chemical Formula 1, M₁ is a Group 4 transition metal, and is preferably zirconium (Zr) or titanium (Ti), more preferably zirconium (Zr).

X₁₁ and X₁₂ are each independently C₁₋₂₀ alkyl or halogen, preferably halogen, and more preferably chlorine (Cl).

When the first transition metal compound represented by Chemical Formula 1 contains zirconium (Zr) as a central metal, it may have more orbitals capable of accepting electrons as compared with the transition metal compound containing another group 14 transition metal such as Hf. Accordingly, it can bind to monomers with higher affinity, resulting in much improved catalytic activity.

In addition, the compound represented by Chemical Formula 1 includes an A₁(Q₁₁)(Q₁₂) group as a bridge group of two indenyl derivative compounds. In Chemical Formula 1, A₁ is carbon, silicon, or germanium, and preferably silicon.

One of Q₁₁ and Q₁₂, which are substituents of A₁, is C₂₋₂₀ alkoxyalkyl, and the other is C₁₋₂₀ alkyl, and preferably, one of Q₁₁ and Q₁₂ is C₁₋₄ alkyl, and the other is C₂₋₂₀ alkoxyalkyl. As such, any one of Q₁₁ and Q₁₂, which are the substituents of A₁, may include a tether group of C₂₋₂₀ alkoxyalkyl. When any one of Q₁₁ and Q₁₂ has a tether group, leaching of the catalyst precursor during the polymerization reaction is prevented, and as a result, fouling caused by the reaction of the leached catalyst precursor with the cocatalyst can be prevented.

In addition to the effect of preventing leaching of the catalyst precursor, the larger atomic size and wide coordination angle compared to conventional carbon bridges in metallocene compounds facilitate monomer access during polymerization, thereby enhancing catalytic activity. This effect can be further increased when any one of Q₁₁ and Q₁₂ in the tether is -(CH₂)ₙ-Rₐ (wherein Rₐ may be C₁₋₆ alkoxy, more specifically C₁₋₆ linear alkoxy, or C₃₋₆ branched alkoxy, and more specifically C₃₋₆ branched alkoxy such as a tert-butoxy group, and n is an integer of 2 to 10, or 3 to 9), and the other one is C₁₋₄ alkyl. Preferably, any one of Q₁₁ and Q₁₂ may be tert-butoxypropyl, tert-butoxybutyl, tert-butoxypentyl, or tert-butoxyhexyl, and the other may be methyl.

In addition, in Chemical Formula 1, R₁₁ and R₁₂ are each independently C₆₋₂₀ aryl, C₇₋₂₀ alkylaryl, C₇₋₂₀ arylalkyl, or C₇₋₂₀ alkoxyaryl. That is, in Chemical Formula 1, the hydrogen at the 4-position of the indenyl derivative compound may each independently be substituted with C₆₋₂₀ aryl, C₇₋₂₀ alkylaryl, C₇₋₂₀ arylalkyl, or C₇₋₂₀ alkoxyaryl. When the indenyl derivative compound includes a substituent containing an aryl group as described above, improved catalytic activity can be achieved due to the inductive effect, which can provide a sufficient amount of electrons. Accordingly, R₁₁ and R₁₂ are preferably C₆₋₂₀ aryl, or C₇₋₂₀ alkylaryl, and more preferably phenyl, naphthyl, methylphenyl, ethylphenyl, n-propylphenyl, iso-propylphenyl, n-butylphenyl, iso-butylphenyl, tert-butylphenyl, or di-tert-butylphenyl.

In addition, the methyl group substituted at the 2-position of the indenyl derivative compound in Chemical Formula 1 provides an appropriate steric effect on ethylene and comonomers approaching the active site during polymerization, thereby enabling suitable copolymerization behavior and molecular weight control.

Specific examples of the first transition metal compound represented by Chemical Formula 1 may include compounds with the structures below, but the present disclosure is not limited thereto.

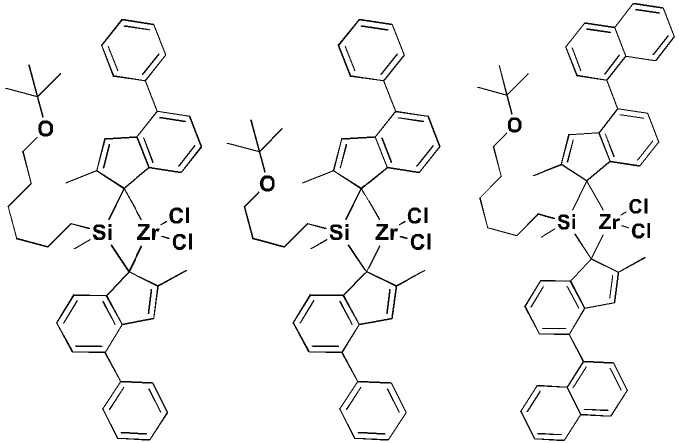

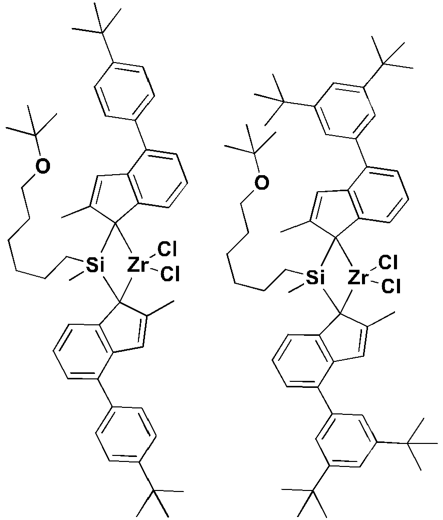

The first transition metal compound represented by Chemical Formula 1 described above may be synthesized by applying known reactions, and more detailed synthetic methods can be found in the Examples section.

Meanwhile, the second transition metal compound represented by Chemical Formula 2 has a bridged structure including two cyclopentadienyl derivative compounds, which allows for easy control of the electronic/steric environment around the transition metal. As a result, the chemical structure, molecular weight distribution, and mechanical properties of the resulting polyethylene can be readily adjusted.

Specifically, in Chemical Formula 2, M₂ is a Group 4 transition metal, preferably zirconium (Zr) or titanium (Ti), and more preferably zirconium (Zr).

X₂₁ and X₂₂ are each independently C₁₋₂₀ alkyl or halogen, preferably halogen, and more preferably chlorine (Cl).

When the second transition metal compound represented by Chemical Formula 2 contains zirconium (Zr) as a central metal, it may have more orbitals capable of accepting electrons as compared with the transition metal compound containing another group 14 transition metal such as Hf. Accordingly, it can bind to monomers with higher affinity, resulting in much improved catalytic activity.

In addition, the compound represented by Chemical Formula 2 includes an A₂(Q₂₁)(Q₂₂) group as a bridge group of two cyclopentadienyl derivative compounds. In Chemical Formula 2, A₂ is carbon, silicon, or germanium, and preferably silicon.

Further, in the second transition metal compound represented by Chemical Formula 2, R₂₂ to R₂₅ are each independently hydrogen, C₁₋₂₀ alkyl, C₆₋₂₀ aryl, C₇₋₂₀ alkylaryl, or C₇₋₂₀ arylalkyl, and Q₂₁ and Q₂₂ are each independently C₁₋₂₀ alkyl or C₂₋₂₀ alkoxyalkyl. In addition, one or more of Q₂₁ and Q₂₂, which are substituents of the bridge group A₂(Q₂₁)(Q₂₂), and R₂₁, which is a substituent of the cyclopentadienyl derivative compound, is C₂₋₂₀ alkoxyalkyl.

As such, one or more of Q₂₁, Q₂₂, and R₂₁ may include a tether group of C₂₋₂₀ alkoxyalkyl. When one or more of Q₂₁, Q₂₂, and R₂₁ has a tether group, leaching of the catalyst precursor during the polymerization reaction is prevented, and as a result, fouling caused by the reaction of the leached catalyst precursor with the cocatalyst can be prevented.

In addition to the effect of preventing leaching of the catalyst precursor, the larger atomic size and wide coordination angle compared to conventional carbon bridges in metallocene compounds facilitate monomer access during polymerization, thereby enhancing catalytic activity. This effect can be further increased when any one of Q₂₁, Q₂₂, and R₂₁ is -(CH₂)ₙ-R_{b} (wherein R_{b} may be C₁₋₆ alkoxy, more specifically C₁₋₆ linear alkoxy, or C₃₋₆ branched alkoxy, and more specifically C₃₋₆ branched alkoxy such as a tert-butoxy group, and n is an integer of 2 to 10, or 3 to 9), and the other one is C₁₋₄ alkyl. Preferably, any one of Q₂₁, Q₂₂, and R₂₁ may be tert-butoxyethyl, tert-butoxypropyl, tert-butoxybutyl, tert-butoxypentyl, or tert-butoxyhexyl.

Further, in the second transition metal compound represented by Chemical Formula 2, R₂₂ to R₂₅ are each independently hydrogen, C₁₋₂₀ alkyl, C₆₋₂₀ aryl, C₇₋₂₀ alkylaryl, or C₇₋₂₀ arylalkyl. Preferably, R₂₂ to R₂₅ are each independently hydrogen, C₁₋₆ alkyl, or C₆₋₁₀ aryl, and more preferably, hydrogen, methyl, ethyl, n-propyl, iso-propyl, n-butyl, iso-butyl, tert-butyl, phenyl, naphthyl, methylphenyl, ethylphenyl, n-propylphenyl, iso-propylphenyl, n-butylphenyl, iso-butylphenyl, tert-butylphenyl, or di-tert-butylphenyl.

In one embodiment, two or more of R₂₂ to R₂₅ may be C₁₋₆ alkyl or C₆₋₁₀ aryl. In another embodiment, all of R₂₂ to R₂₅ are C₁₋₆ alkyl, preferably methyl, or two or more of R₂₂ to R₂₅ are C₆₋₁₀ aryl, preferably phenyl.

In Chemical Formula 2, one of the cyclopentadienyl derivative compounds is substituted with R₂₂ to R₂₅, and can exhibit enhanced catalytic activity due to an inductive effect that can provide sufficient electrons and an appropriate steric effect. When used in combination with the first transition metal compound represented by Chemical Formula 1, it enables proper control over the comonomer distribution in the resulting polyethylene, thereby improving both transparency and processability. In addition, it exhibits excellent hydrogen reactivity, which helps reduce wax formation during polymerization, thereby enhancing process stability.

Specific examples of the second transition metal compound represented by Chemical Formula 2 may include compounds with the structures below, but the present disclosure is not limited thereto.

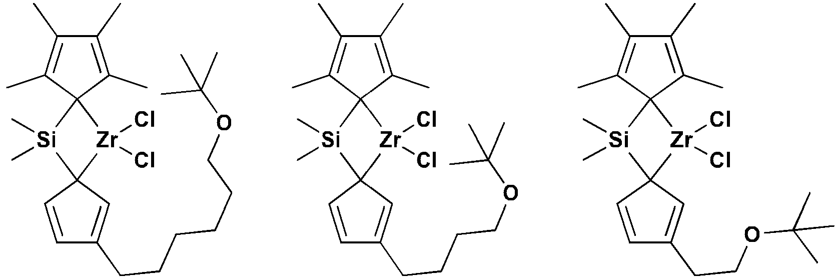

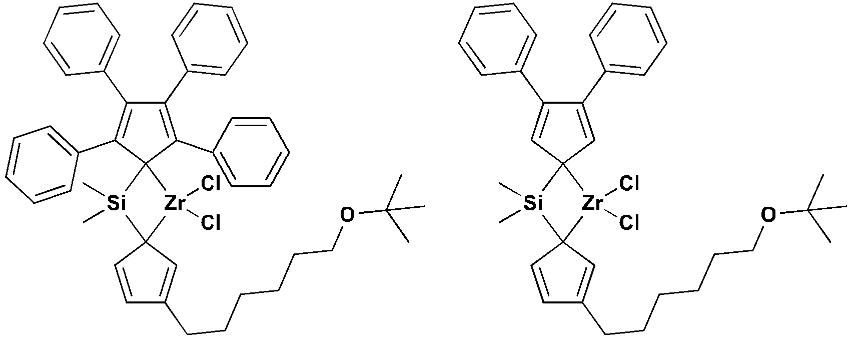

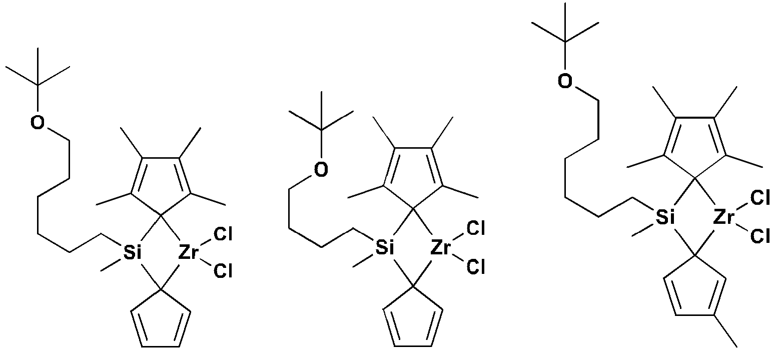

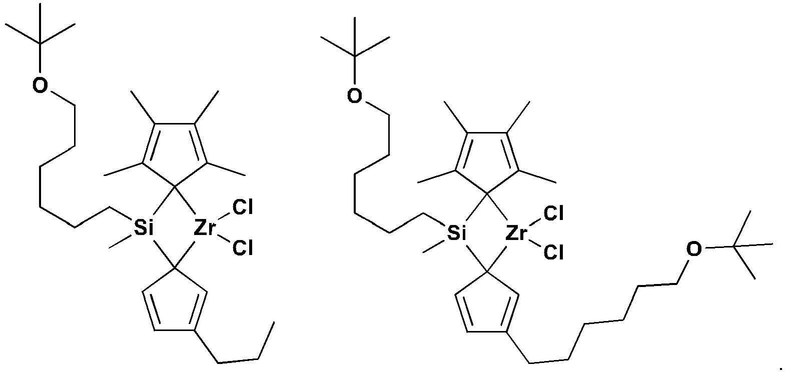

The second transition metal compound represented by Chemical Formula 2 described above may be synthesized by applying known reactions, and more detailed synthetic methods can be found in the Examples section.

Meanwhile, the hybrid supported metallocene catalyst according to the present disclosure can increase catalytic activity and further improve physical properties of the resulting polymer by controlling the molar ratio of the first and second transition metal compounds.

For example, the hybrid supported metallocene catalyst may include the first and the second transition metal compound in a molar ratio of 1:10 to 10:1. When this mixing ratio condition is satisfied, the catalytic activity can be excellently maintained, and the high copolymerization and low copolymerization of the polyethylene to be produced from the hybrid supported catalyst can be optimized, thereby further improving transparency and processability. More specifically, the molar ratio of the first to the second transition metal compound may be 1:10 or more, 1:5 or more, 1:4 or more, 1:3 or more, 1:2 or more, or 1:1 or more, and 10:1 or less, 5:1 or less, 4:1 or less, 3:1 or less, or 2:1 or less.

In addition, the hybrid supported metallocene catalyst according to the present disclosure includes a cocatalyst. When the hybrid supported metallocene catalyst includes the cocatalyst, it can exhibit high catalytic activity and improve process stability.

Specifically, the cocatalyst may include one or more compounds represented by Chemical Formula 3 below.

[Chemical Formula 3] -[Al(R₄₁)-O]a-

In Chemical Formula 3,
R₄₁ is halogen; or halogen-substituted or unsubstituted C₁₋₂₀ hydrocarbyl; and
a is an integer of 2 or more.

Meanwhile, in this specification, the hydrocarbyl group refers to a monovalent functional group derived from a hydrocarbon by the removal of one hydrogen atom, and may include an alkyl group, an alkenyl group, an alkynyl group, an aryl group, an aralkyl group, an aralkenyl group, an aralkynyl group, an alkylaryl group, an alkenylaryl group, an alkynylaryl group, etc. Further, a C₁₋₂₀ hydrocarbyl group may be a C₁₋₁₅ or C₁₋₁₀ hydrocarbyl group. Specifically, a C₁₋₂₀ hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n-hexyl group, an n-heptyl group, or a cyclohexyl group; or an aryl group such as a phenyl group, a naphthyl group, or an anthracenyl group.

Examples of the compound represented by Chemical Formula 3 may include alkyl aluminoxane-based compounds such as methylaluminoxane, ethylaluminoxane, isobutylaluminoxane, butylaluminoxane, etc., and any one or a mixture of two or more thereof may be used.

Among the above compounds, the cocatalyst may more specifically be an alkyl aluminoxane-based cocatalyst such as methylaluminoxane.

The alkyl alum inoxane-based cocatalyst can further enhance catalytic activity by stabilizing the first and second transition metal compounds and acting as a Lewis acid, as it includes a metal element capable of forming a bond with a functional group introduced into the bridge group of the first and second transition metal compounds through Lewis acid-base interaction.

In addition, the amount of the cocatalyst used may be appropriately adjusted depending on the desired effect of the catalyst and the physical properties of the resulting polyethylene. For example, when silica is used as the support, as described below, the cocatalyst may be supported in an amount of, for instance, 100 g or more, 1000 g or more, or 2000 g or more, and 6000 g or less, 5500 g or less, or 5400 g or less, based on 1000 g of silica.

In addition, the hybrid supported metallocene catalyst according to the present disclosure may include a support. When the hybrid supported metallocene catalyst includes the support, the first and second transition metal compounds are used in the form of supported catalysts supported on the support.

As the support, a material having highly reactive groups such as hydroxyl groups, silanol groups, or siloxane groups on its surface may be used. For this purpose, the surface may be modified by calcination or dried to remove moisture from the surface.

For example, silica prepared by calcining silica gel, silica dried at high temperature, silica-alumina, or silica-magnesia may be used. These supports may contain components such as oxides, carbonates, sulfates, and nitrates, including Na₂O, K₂CO₃, BaSO₄, and Mg(NO₃)₂.

When used in the form of a supported catalyst, the resulting polymer exhibits excellent particle morphology and bulk density, making it suitable for conventional slurry, bulk, or gas-phase polymerization processes. Among various supports, silica is particularly advantageous because the functional groups of the transition metal compounds are chemically bonded and supported thereon. As a result, catalysts leaching from the support surface during the ethylene polymerization process is minimal, thereby reducing fouling caused by polymer adhesion to the reactor walls or agglomeration between polymer particles in slurry or gas-phase polymerization.

The support may have an average particle size (D50) of 20 to 40 µm. When having the particle size described above, transition metal compounds may be supported with higher efficiency, and as a result, catalytic activity can be increased. More specifically, the average particle size of the support may be 20 µm or more, or 25 µm or more, and 40 µm or less, or 30 µm or less.

In addition, when supported on the support, the first and second transition metal compounds may each be supported in an amount of, for example, 1 mmol or more, 3 mmol or more, 5 mmol or more, 7 mmol or more, or 10 mmol or more, and 100 mmol or less, 80 mmol or less, 60 mmol or less, or 50 mmol or less, based on 1,000 g of silica support. When supported within this range, the catalyst can exhibit appropriate catalytic activity, which may be advantageous in terms of maintaining catalyst performance and cost efficiency.

The hybrid supported metallocene catalyst or the catalyst composition having the above-described configuration according to the present disclosure may be prepared by a method including: a step of supporting a cocatalyst compound on a support, and a step of supporting the first and second transition metal compounds on the support. The order of supporting the cocatalyst and the first and second transition metal compounds may be varied as needed, and the order of supporting the first and the second transition metal compounds may also be changed. Alternatively, the first and the second transition metal compounds may also be supported simultaneously. Considering the effects of the structure formed depending on the order of supporting, it is particularly advantageous to first support the cocatalyst on a support, followed by sequentially supporting the first and the second transition metal compounds. This approach can provide a supported catalyst exhibiting high catalytic activity and improved process stability during polyethylene production.

As described above, the hybrid supported metallocene catalyst according to the present disclosure may exhibit excellent catalytic activity by including the first and second transition metal compounds having specific structures. Accordingly, the hybrid supported metallocene catalyst can be suitably used for the polymerization of ethylene monomers and olefin-based monomers.

Thus, there is also provided a method for preparing a polyethylene including the step of polymerizing an ethylene monomer and an alpha-olefin based monomer in the presence of the hybrid supported metallocene catalyst while introducing hydrogen.

Specific examples of the alpha-olefin-based monomer may include propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alphamethylstyrene, divinylbenzene, and 3-chloromethylstyrene, and two or more of these monomers may be used in combination for copolymerization. More specifically, the alpha-olefin-based monomer may be 1-butene, 1-hexene, or 1-octene.

The amount of the alpha-olefin-based monomer to be introduced may be determined based on the desired physical properties of the resulting polyethylene. For example, in consideration of the intended physical properties of the polyethylene and the desired improvements in transparency and processability, the alpha-olefin-based monomer may be introduced in an amount of 5 to 20 wt% based on a total weight of the monomers including the ethylene monomer and the alpha-olefin-based monomer. More specifically, the alpha-olefin-based monomer may be introduced in an amount of 5 wt% or more, 6 wt% or more, 7 wt% or more, 8 wt% or more, 9 wt% or more, or 10 wt% or more, and 20 wt% or less, 19 wt% or less, 18 wt% or less, or 17 wt% or less, based on the total weight of the monomers including the ethylene monomer and the alpha-olefin-based monomer.

The polymerization reaction is performed while introducing hydrogen.

Specifically, hydrogen may be introduced in an amount of 5 to 500 ppm, more specifically 5 ppm or more, 10 ppm or more, 20 ppm or more, or 30 ppm or more, and 500 ppm or less, 450 ppm or less, 400 ppm or less, 350 ppm or less, 300 ppm or less, 250 ppm or less, or 200 ppm or less, based on the total weight of the monomers including the ethylene monomer and the alpha-olefin-based monomer. Introducing hydrogen within this range may facilitate achieving the desired physical properties of the resulting polyethylene. When the polymerization reaction is performed under hydrogen-free conditions, the melt index (MI) of the resulting polyethylene may be significantly reduced.

The polymerization reaction may be performed as a slurry polymerization.

Accordingly, the polymerization may be performed using a single continuous slurry polymerization reactor or a loop slurry reactor.

In addition, the hybrid supported catalyst may be dissolved or diluted in an aliphatic hydrocarbon solvent having 4 to 12 carbon atoms such as isobutane, pentane, hexane, heptane, nonane, decane, and their isomers, in an aromatic hydrocarbon solvent such as toluene or benzene, or in a chlorinated hydrocarbon solvent such as dichloromethane or chlorobenzene, and then injected. It is preferable to use the solvent after removing trace amounts of water or air that may act as catalyst poisons by treating with a small amount of alkyl aluminum, and the use of an additional cocatalyst is also possible.

The polymerization reaction may be performed at a temperature of 40°C or higher, 60°C or higher, or 80°C or higher, and 110°C or lower, 100°C or lower, or 90°C or lower. Moreover, when the pressure is controlled during the polymerization, the reaction may be performed under a pressure of 5 bar or more, 10 bar or more, or 20 bar or more, and 50 bar or less, 45 bar or less, or 40 bar or less. Performing the polymerization under these temperature and pressure conditions may facilitate the attainment of the desired physical properties of the polyethylene.

The polyethylene produced by the above-described method exhibits excellent processability, as represented by extrusion pressure, and excellent transparency, as measured by haze. In a preferred embodiment, the polyethylene may be an ethylene/1-hexene copolymer.

Specifically, the polyethylene prepared using the hybrid supported metallocene catalyst satisfies the following conditions (i) and (ii):
(i) Density measured according to ASTM D1505: 0.910 to 0.930 g/cm³
(ii) Haze measured according to ASTM D1003: 10% or less.

More specifically, the polyethylene may have a density of 0.910 g/cm³ or more, or 0.915 g/cm³ or more, and 0.930 g/cm³ or less, or 0.926 g/cm³ or less, as measured in accordance with ASTM D1505.

In addition, the polyethylene may have a haze value of 10% or less, 9.5% or less, 9.0% or less, 8.5% or less, or 8.0% or less, as measured in accordance with ASTM D1003. There is no specific lower limit for the haze value, since lower values are generally preferred. However, it may be, for example, 1.0% or more, 2.0% or more, 3.0% or more, 4.0% or more, or 5.0% or more. The measurement method for haze is described in detail in Examples below.

Furthermore, the polyethylene may have an extrusion pressure (processing load, bar), measured using a Haake extruder under the conditions of cylinder-1/-2/- 3/die = 180/185/185/190 and 40 rpm, of 250 bar or less, more specifically 250 bar or less, 230 bar or less, 220 bar or less, 210 bar or less, 200 bar or less, 190 bar or less, 180 bar or less, 170 bar or less, or 160 bar or less. There is no specific lower limit for the extrusion pressure, since lower values are generally preferred. However, it may be, for example, 100 bar or more, 110 bar or more, 120 bar or more, 130 bar or more, 140 bar or more, or 150 bar or more. The measurement method for extrusion pressure is also described in Examples below.

### [EFFECT OF THE INVENTION]

As described above, the hybrid supported metallocene catalyst according to the present disclosure exhibits high activity in olefin polymerization and enables the production of a polyethylene with excellent processability and high transparency.

Accordingly, the polyethylene prepared using the hybrid supported metallocene catalyst can be advantageously used in applications such as films, due to its superior processability, mechanical properties, and transparency.

### [BEST MODE FOR CARRYING OUT THE INVENTION]

Hereinafter, preferred embodiments are provided to aid in the understanding of the present invention. However, the following embodiments are merely for illustrating the present invention, and are not intended to limit the scope of the present invention.

### <Preparation of transition metal compounds>

### Synthesis Example 1-1

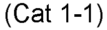

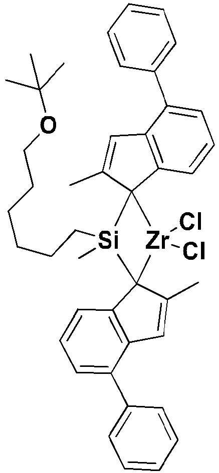

### Preparation of Ligand Compound

6-chlorohexan-1-ol (1 equiv.) was dissolved in Hexane (1 M), and then Amberlyst (10 wt%) was added. Isobutene gas was bubbled at room temperature for 3 hours. The reaction mixture was filtered through Celite and dried under vacuum to obtain 1-(tert-butoxy)-6-chlorohexane. In a separate flask, Mg (1.5 eq) was prepared, washed with HCl and acetone, and vacuum dried. THF (1 M) was added thereto, and 10% of 1-(tert-butoxy)-6-chlorohexane was added. After refluxing until activation was complete, the mixture was cooled to 50°C, and the remaining 90% of 1-(tert-butoxy)-6-chlorohexane was slowly added. The reaction was maintained overnight. The reaction product was filtered with Celite. Thereafter, MeSiCl₃ (1 equiv.) was dissolved in THF (1 M) in a new flask, followed by slowly adding the Grignard reagent at -25°C. After stirring overnight at room temperature, all solvent was dried, and the residue was redissolved in hexane. The solution was then filtered to obtain (6-(tert-butoxy)hexyl)dichloro(methyl)silane.

16.00 mmol of 2-methyl-7-phenyl-1H-indene was added to a Schlenk flask and vacuum dried for 30 minutes. 60 mL of THF was added, and the mixture was stirred until fully dissolved. After cooling the flask to -25°C, n-BuLi (2.5 M, 6.4 mL) was slowly added dropwise with stirring. After stirring for 12 hours at 25°C, CuCN (5 mol%) was added. After stirring for 30 minutes, the mixture was cooled to -25°C. (6-(tert-butoxy)hexyl)dichloro(methyl)silane (8.00 mmol) was added thereto, and stirred for 12 hours at 25°C. Water was added and stirred for 1 hour, followed by extraction. The organic layer was dehydrated with MgSO₄, filtered again, and dried to obtain the ligand compound.

### Preparation of transition metal compound

21 mL of toluene and 2.1 mL of diethyl ether were added to the ligand compound obtained above, and stirred. After cooling to -25°C, n-BuLi (2.5 M, 12.8 mL) was slowly added dropwise with stirring. After stirring for 12 hours at 25°C, the mixture was cooled to -20°C, and ZrCl₄ · 2THF (8.00 mmol) dissolved in toluene (1 M) was added. After stirring for 12 hours at 25°C, all solvent was dried. The residue was dissolved in DCM, and filtered. Then, the filtrate was dried, and recrystallized using dichloromethane, pentane, and hexane to obtain the transition metal compound of structural formula Cat 1-1 in 35% yield (racemic/meso ratio of 30 : 1).

¹H NMR(500 MHz, C6D6, 7.15 ppm): 1.19(9H, s), 1.32(3H, s), 1.48-1.86(10H, m), 2.25(6H, s), 3.37(2H, t), 6.95(2H, s), 7.13(2H, t), 7.36(2H, d), 7.43(6H, t), 7.62(4H, d), 7.67(2H, d)

### Synthesis Example 1-2

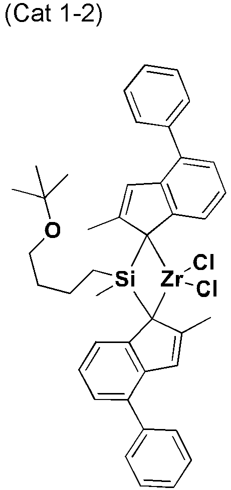

### Preparation of Ligand Compound

A ligand compound was prepared in the same manner as in the preparation of the ligand compound in Synthesis Example 1-1, except that 4-chlorobutan-1-ol was used instead of 6-chlorohexan-1-ol in Synthesis Example 1-1.

### Preparation of transition metal compound

The transition metal compound of structural formula Cat 1-2 was obtained in 40% yield (racemic/meso ratio of 20 : 1) in the same manner as in the preparation of the transition metal compound in Synthesis Example 1-1, except that the ligand compound of Synthesis Example 1-2 was used instead of the ligand compound of Synthesis Example 1-1.

¹H NMR(500 MHz, C6D6, 7.15 ppm): 1.21(9H, s), 1.33(3H, s), 1.58-1.96(6H, m), 2.31(6H, s), 3.42(2H, t), 6.98(2H, s), 7.15(2H, t), 7.38(2H, d), 7.45-7.54(10H, m), 7.28(2H, d)

### Synthesis Example 1-3

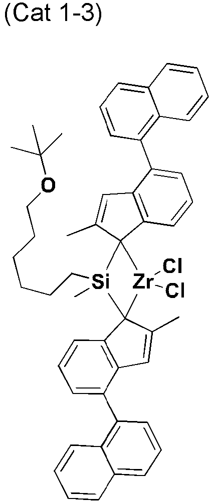

### Preparation of Ligand Compound

A ligand compound was prepared in the same manner as in the preparation of the ligand compound in Synthesis Example 1-1, except that 1-(2-methyl-1H-inden-7-yl)naphthalene was used instead of 2-methyl-7-phenyl-1H-indene in Synthesis Example 1-1.

### Preparation of transition metal compound

The transition metal compound of structural formula Cat 1-3 was obtained in 25% yield (racemic/meso ratio of 15 : 1) in the same manner as in the preparation of the transition metal compound in Synthesis Example 1-1, except that the ligand compound of Synthesis Example 1-3 was used instead of the ligand compound of Synthesis Example 1-1.

¹H NMR(500 MHz, CDCl3, 7.26 ppm): 0.80-2.15 (31H, m), 2.23 (6H, d), 3.43 (2H, t), 6.57 (2H, s), 6.95-8.00 (20H, m)

### Synthesis Example 1-4

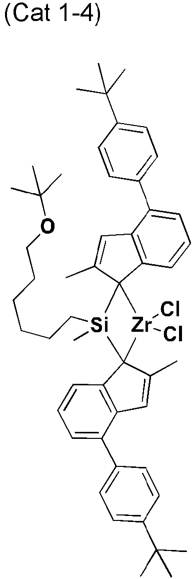

### Preparation of Ligand Compound

A ligand compound was prepared in the same manner as in the preparation of the ligand compound in Synthesis Example 1-1, except that 7-(4-(tert-butyl)phenyl)-2-methyl-1H-indene was used instead of 2-methyl-7-phenyl-1H-indene in Synthesis

### Example 1-1.

### Preparation of transition metal compound

The transition metal compound of structural formula Cat 1-4 was obtained in 34% yield (racemic/meso ratio of 30 : 1) in the same manner as in the preparation of the transition metal compound in Synthesis Example 1-1, except that the ligand compound of Synthesis Example 1-4 was used instead of the ligand compound of Synthesis Example 1-1.

¹H NMR (500 MHz, CDCl3, 7.26 ppm): 1.20 (9H, s), 1.27 (3H, s), 1.34 (18H, s), 1.20-1.90 (10H, m), 2.25 (3H, s), 2.26 (3H, s), 3.38 (2H, t), 7.00 (2H, s), 7.09-7.13 (2H, m), 7.38 (2H, d), 7.45 (4H, d), 7.58 (4H, d), 7.59 (2H, d), 7.65 (2H, d)

### Synthesis Example 1-5

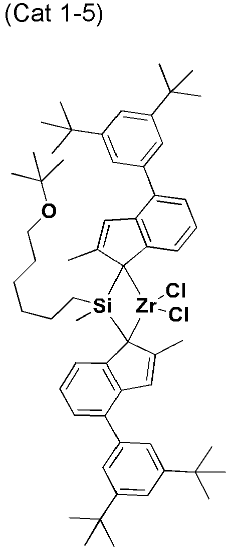

### Preparation of Ligand Compound

A ligand compound was prepared in the same manner as in the preparation of the ligand compound in Synthesis Example 1-1, except that 7-(3,5-di-tert-butylphenyl)-2-methyl-1H-indene was used instead of 2-methyl-7-phenyl-1H-indene in Synthesis Example 1-1.

### Preparation of transition metal compound

The transition metal compound of structural formula Cat 1-5 was obtained in 28% yield (racemic/meso ratio of 20 : 1) in the same manner as in the preparation of the transition metal compound in Synthesis Example 1-1, except that the ligand compound of Synthesis Example 1-5 was used instead of the ligand compound of Synthesis Example 1-1.

¹H NMR (500MHz, CDCl3, 7.26 ppm)): 0.87-2.10 (55H, m), 2.27 (3H, s), 2.28 (3H, s), 3.38 (2H, t), 6.68 (2H, s), 7.18-7.48 (12H, m)

### Synthesis Example 2-1

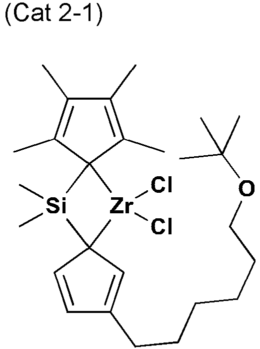

### Preparation of Ligand Compound

6-chlorohexan-1-ol (1 equiv) was dissolved in hexane (1 M), and then Amberlyst (10 wt%) was added. Isobutene gas was bubbled at room temperature for 3 hours. The reaction mixture was filtered through Celite and dried under vacuum to obtain 1-(tert-butoxy)-6-chlorohexane. 1-(tert-butoxy)-6-chlorohexane (20.0 mmol) was weighed into a flask, and THF (1.0 M) was added. After cooling to -25°C, Sodium cyclopentadiene (1.0 M in THF, 1 eq.) was added. After stirring for 12 hours at room temperature, all solvent was dried, and the residue was redissolved in hexane. The solution was then filtered to obtain 1-(6-(tert-butoxy)hexyl)cyclopenta-1,3-diene.

10.00 mmol of tetramethylcyclopentadiene was added to a Schlenk flask and vacuum dried for 30 minutes. 40 mL of THF was added, and the mixture was cooled to -25°C, followed by the slow addition of n-BuLi (2.5 M, 4 mL) with stirring. After stirring for 12 hours at 25°C, the mixture was cooled to -25°C. Me₂SiCl₂(dichlorodimethylsilane, 10.00 mmol) was added thereto, and stirred for 12 hours at 25°C. In another flask, 1-(6-(tert-butoxy)hexyl)cyclopenta-1,3-diene (10.00 mmol) synthesized previously and THF (40 mL) were added and cooled to -25°C, then n-BuLi (2.5 M, 4 mL) was slowly added dropwise with stirring. Thereafter, the mixture was stirred for 12 hours at 25°C. After cooling the chlorodimethyl(2,3,4,5-tetramethylcyclopenta-2,4-dien-1-yl)silane flask synthesized previously to -25°C, lithium 1-(6-(tert-butoxy)hexyl)cyclopenta-1,3-diene was slowly added dropwise. After stirring for 12 hours at 25°C, water was added and stirred for 1 hour, followed by extraction. The organic layer was dehydrated with MgSO₄, filtered again, and dried to obtain the ligand compound.

### Preparation of transition metal compound

25 mL of diethyl ether was added to the ligand compound obtained above, and stirred. After cooling to -25°C, n-BuLi (2.5 M, 8 mL) was slowly added dropwise with stirring. After stirring for 12 hours at 25°C, the mixture was cooled to -20°C, and ZrCl₄ · 2THF (10.00 mmol) dissolved in toluene (1 M) was added. After stirring for 12 hours at 25°C, all solvent was dried. The residue was dissolved in DCM, and filtered. Then, the filtrate was dried, and recrystallized using hexane to obtain the transition metal compound of structural formula Cat 2-1 in 25% yield.

¹H NMR(500 MHz, C6D6, 7.15 ppm): 0.37(3H, s), 0.39(3H, s), 1.12(9H, s), 1.32-1.40(4H, m), 1.53-1.60(4H, m), 1.66(3H, s), 1.73(3H, s), 2.01(3H, s), 2.03(3H, s), 2.79-2.85(2H, m), 3.23(2H, t), 5.16(1H, t), 5.43(1H, t), 6.73(1H, t)

### Synthesis Example 2-2

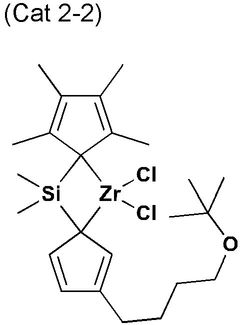

### Preparation of Ligand Compound

A ligand compound was prepared in the same manner as in the preparation of the ligand compound in Synthesis Example 2-1, except that 4-chlorobutan-1-ol was used instead of 6-chlorohexan-1-ol in Synthesis Example 2-1.

### Preparation of transition metal compound

The transition metal compound of structural formula Cat 2-2 was obtained in 40% yield in the same manner as in the preparation of the transition metal compound in Synthesis Example 2-1, except that the ligand compound of Synthesis Example 2-2 was used instead of the ligand compound of Synthesis Example 2-1.

¹H NMR(500 MHz, C6D6, 7.15 ppm): 0.39(3H, s), 0.40(3H, s), 1.14(9H, s), 1.42-1.50(4H, m), 1.68(3H, s), 1.75(3H, s), 2.05(3H, s), 2.07(3H, s), 2.85-2.92(2H, m), 3.25(2H, t), 5.18(1H, t), 5.44(1H, t), 6.75(1H, t)

### Synthesis Example 2-3

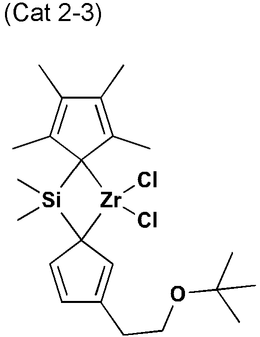

### Preparation of Ligand Compound

A ligand compound was prepared in the same manner as in the preparation of the ligand compound in Synthesis Example 2-1, except that 2-bromoethan-1-ol was used instead of 6-chlorohexan-1-ol in Synthesis Example 2-1.

### Preparation of transition metal compound

The transition metal compound of structural formula Cat 2-3 was obtained in 60% yield in the same manner as in the preparation of the transition metal compound in Synthesis Example 2-1, except that the ligand compound of Synthesis Example 2-3 was used instead of the ligand compound of Synthesis Example 2-1.

¹H NMR(500 MHz, C6D6, 7.15 ppm): 0.38(3H, s), 0.40(3H, s), 1.13(9H, s), 1.61(3H, s), 1.69(3H, s), 2.03(3H, s), 2.05(3H, s), 2.58-2.65(2H, m), 3.25(2H, t), 5.15(1H, t), 5.43(1H, t), 6.72(1H, t)

### Synthesis Example 2-4

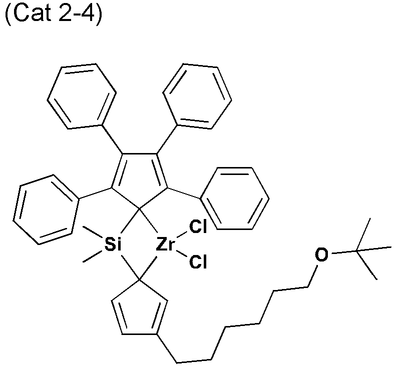

### Preparation of Ligand Compound

A ligand compound was prepared in the same manner as in the preparation of the ligand compound in Synthesis Example 2-1, except that tetraphenylcyclophentadiene was used instead of tetramethylcyclopentadiene in Synthesis Example 2-1.

### Preparation of transition metal compound

The transition metal compound of structural formula Cat 2-4 was obtained in 54% yield in the same manner as in the preparation of the transition metal compound in Synthesis Example 2-1, except that the ligand compound of Synthesis Example 2-4 was used instead of the ligand compound of Synthesis Example 2-1.

¹H NMR(500 MHz, C6D6, 7.15 ppm): 0.27(3H, s), 0.29(3H, s), 1.15(9H, s), 1.33-1.43(4H, m), 1.55-1.61(4H, m), 2.89-2.93(2H, m), 3.43(2H, t), 5.18(1H, t), 5.45(1H, t), 6.78(1H, t), 7.03-7.15(10H, m), 7.23-7.34(10H, m)

### Synthesis Example 2-5

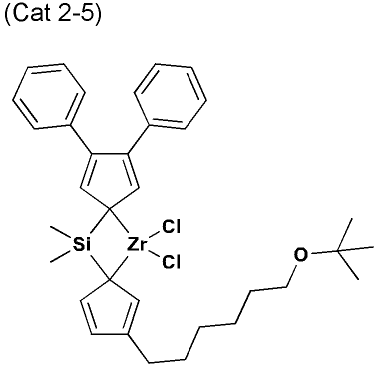

### Preparation of Ligand Compound

A ligand compound was prepared in the same manner as in the preparation of the ligand compound in Synthesis Example 2-1, except that (3,5-dimethylcyclopenta-2,5-diene-1,2-diyl)dibenzene was used instead of tetramethylcyclopentadiene in Synthesis Example 2-1.

### Preparation of transition metal compound

The transition metal compound of structural formula Cat 2-5 was obtained in 54% yield in the same manner as in the preparation of the transition metal compound in Synthesis Example 2-1, except that the ligand compound of Synthesis Example 2-5 was used instead of the ligand compound of Synthesis Example 2-1.

¹H NMR(500 MHz, C6D6, 7.15 ppm): 0.32(3H, s), 0.33(3H, s), 1.14(9H, s), 1.36-1.46(4H, m), 1.51-1.62(4H, m), 2.90-2.92(2H, m), 3.44(2H, t), 5.18(1H, t), 5.45(1H, t), 5.48(2H, s), 6.72(1H, t), 7.09-7.18(10H, m)

### Synthesis Example 2-6

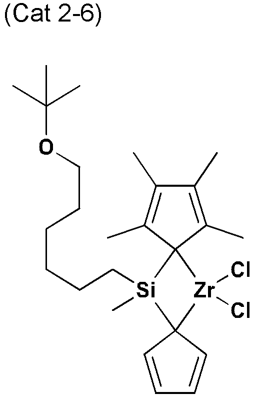

### Preparation of Ligand Compound

10.00 mmol of tetramethylcyclopentadiene was added to a Schlenk flask and vacuum dried for 30 minutes. 40 mL of THF was added, and the mixture was cooled to -25°C, followed by the slow addition of n-BuLi (2.5 M, 4 mL) with stirring. After stirring for 12 hours at 25°C, the mixture was cooled to -25°C. (6-(tert-butoxy)hexyl)dichloro(methyl)silane (10.00 mmol) synthesized in Synthesis Example 1-1 was added thereto, and stirred for 12 hours at 25°C. Then, the mixture was cooled to -25°C, and NaCp (1.0 M in THF, 1 eq.) was slowly added dropwise. After stirring for 12 hours at 25°C, water was added and stirred for 1 hour, followed by extraction. The organic layer was dehydrated with MgSO₄, filtered again, and dried to obtain the ligand compound.

### Preparation of transition metal compound

25 mL of diethyl ether was added to the ligand compound obtained above, and stirred. After cooling to -25°C, n-BuLi (2.5 M, 8 mL) was slowly added dropwise with stirring. After stirring for 12 hours at 25°C, the mixture was cooled to -20°C, and ZrCl₄ · 2THF (10.00 mmol) dissolved in toluene (1 M) was added. After stirring for 12 hours at 25°C, all solvent was dried. The residue was dissolved in DCM, and filtered. Then, the filtrate was dried, and recrystallized using hexane to obtain the transition metal compound of structural formula Cat 2-6 in 32% yield.

¹H NMR (500 MHz, CDCl3, 7.26 ppm): 0.82(3H, s), 1.18(9H, s), 1.24-1.66(10H, m), 1.92(3H, s), 1.94(3H, s), 2.03(6H, s), 3.33(2H, s), 5.69(2H, dd), 7.00(2H, dd)

### Synthesis Example 2-7

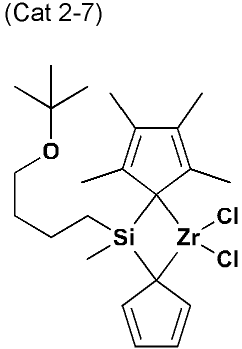

### Preparation of Ligand Compound

A ligand compound was prepared in the same manner as in the preparation of the ligand compound in Synthesis Example 2-6, except that (4-(tert-butoxy)butyl)dichloro(methyl)silane prepared in Synthesis Example 1-2 was used instead of (6-(tert-butoxy)hexyl)dichloro(methyl)silane in Synthesis Example 2-6.

### Preparation of transition metal compound

The transition metal compound of structural formula Cat 2-7 was obtained in 42% yield in the same manner as in the preparation of the transition metal compound in Synthesis Example 2-6, except that the ligand compound of Synthesis Example 2-7 was used instead of the ligand compound of Synthesis Example 2-6.

¹H NMR (500 MHz, CDCl3, 7.26 ppm): 0.84(3H, s), 1.19(9H, s), 1.31-1.54(6H, m), 1.91(3H, s), 1.93(3H, s), 2.04(6H, s), 3.33(2H, s), 5.65(2H, dd), 7.03(2H, dd)

### Synthesis Example 2-8

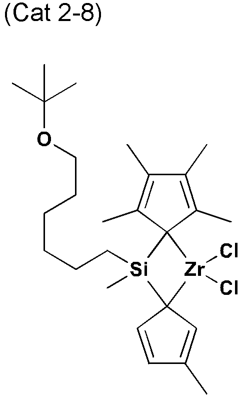

### Preparation of Ligand Compound

10.00 mmol of the ligand compound of Synthesis Example 2-6 was added to a Schlenk flask and vacuum dried for 30 minutes. 40 mL of THF was added, and the mixture was cooled to -25°C, followed by the slow addition of n-BuLi (2.5 M, 8 mL) with stirring. After stirring for 12 hours at 25°C, the mixture was cooled to -25°C. Methyliodide (15 mmol) was added thereto, and stirred for 12 hours at 25°C. Then, water was added and stirred for 1 hour, followed by extraction. The organic layer was dehydrated with MgSO₄, filtered again, and dried to obtain the ligand compound.

### Preparation of transition metal compound

25 mL of diethyl ether was added to the ligand compound obtained above, and stirred. After cooling to -25°C, n-BuLi (2.5 M, 8 mL) was slowly added dropwise with stirring. After stirring for 12 hours at 25°C, the mixture was cooled to -20°C, and ZrCl₄ · 2THF (10.00 mmol) dissolved in toluene (1 M) was added. After stirring for 12 hours at 25°C, all solvent was dried. The residue was dissolved in DCM, and filtered. Then, the filtrate was dried, and recrystallized using hexane to obtain the transition metal compound of structural formula Cat 2-8 in 41% yield.

¹H NMR (500 MHz, CDCl3, 7.26 ppm): 0.58(3H, s), 1.19(9H, s), 1.26-1.68(10H, m), 1.76(3H, s), 1.83(3H, s), 2.10(3H, s), 2.12(3H, s), 2.70(3H, s), 3.34(2H, t), 5.28(1H, s), 5.55(1H, t), 6.80(1H, s)

### Synthesis Example 2-9

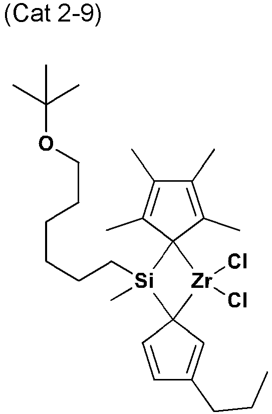

### Preparation of Ligand Compound

A ligand compound was prepared in the same manner as in the preparation of the ligand compound in Synthesis Example 2-8, except that propyliodide was used instead of methyliodide in Synthesis Example 2-8.

### Preparation of transition metal compound

The transition metal compound of structural formula Cat 2-9 was obtained in 28% yield in the same manner as in the preparation of the transition metal compound in Synthesis Example 2-8, except that the ligand compound of Synthesis Example 2-9 was used instead of the ligand compound of Synthesis Example 2-8.

¹H NMR (500 MHz, CDCl3, 7.26 ppm): 0.62(3H, s), 0.96(3H, t), 1.18(9H, s), 1.24-1.66(12H, m), 1.77(3H, s), 1.84(3H, s), 2.08(3H, s), 2.14(3H, s), 2.92(2H, m), 3.35(2H, s), 5.26(1H, s), 5.54(1H, t), 6.83(1H, s)

### Synthesis Example 2-10

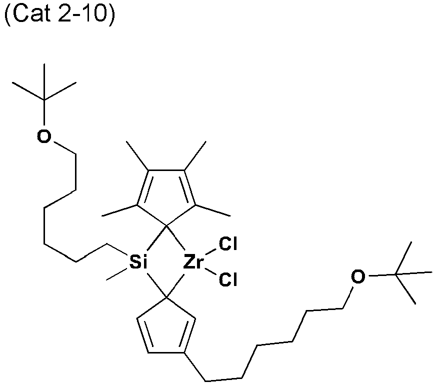

### Preparation of Ligand Compound

A ligand compound was prepared in the same manner as in the preparation of the ligand compound in Synthesis Example 2-8, except that 1-(tert-butoxy)-6-chlorohexane synthesized in Synthesis Example 2-1 and Nal (10 mol%) were used instead of methyliodide in Synthesis Example 2-8.

### Preparation of transition metal compound

The transition metal compound of structural formula Cat 2-10 was obtained in 18% yield in the same manner as in the preparation of the transition metal compound in Synthesis Example 2-8, except that the ligand compound of Synthesis Example 2-10 was used instead of the ligand compound of Synthesis Example 2-8.

¹H NMR (500 MHz, CDCl3, 7.26 ppm): 0.58(3H, s), 1.17(9H, s), 1.19(9H, s), 1.26-1.68(18H, m), 1.78(3H, s), 1.84(3H, s), 2.13(3H, s), 2.14(3H, s), 2.70-2.76(2H, m), 3.28-2.32(4H, m), 5.18(1H, s), 5.45(1H, t), 6.70(1H, s)

### Synthesis Example 3-1

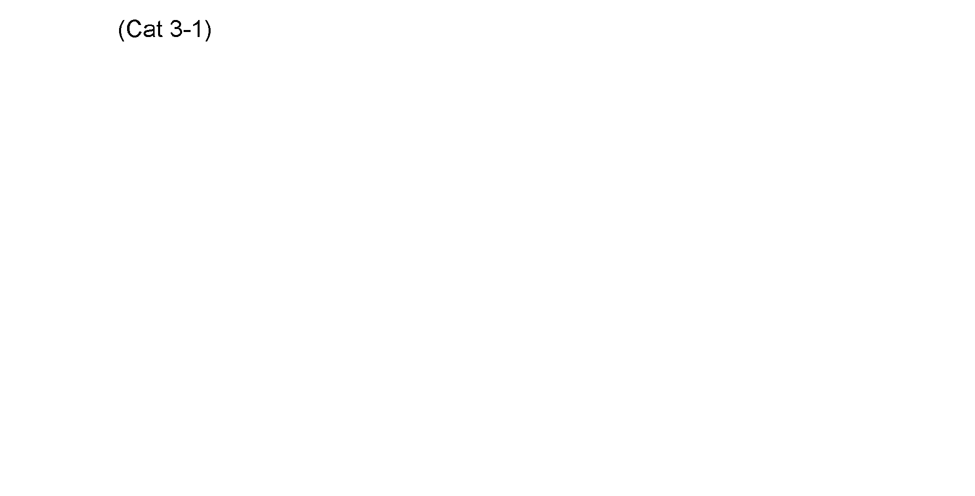

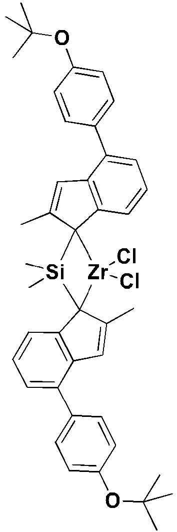

The transition metal compound of structural formula Cat 3-1 was prepared in the same manner as in Synthesis Example 1 of Korean Laid-Open Patent Publication No. 2019-0074798.

### Synthesis Example 3-2

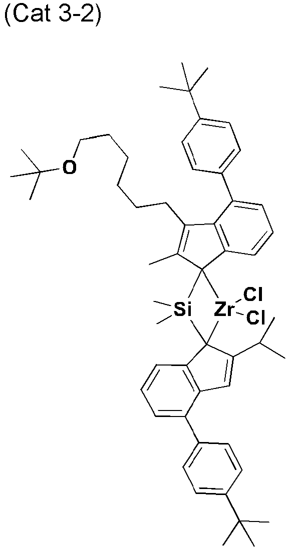

The transition metal compound of structural formula Cat 3-2 was prepared in the same manner as in Synthesis Example 1 of Korean Laid-Open Patent No. 2022-0017200.

### Synthesis Example 3-3

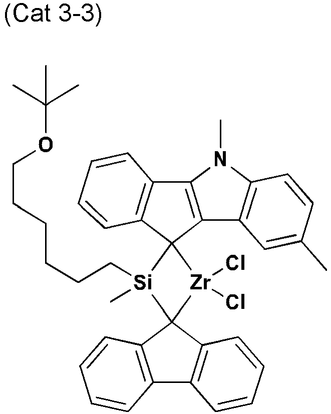

The transition metal compound of structural formula Cat 3-3 was prepared in the same manner as in Synthesis Example 1 of Korean Laid-Open Patent No. 2021-0020831.

### Synthesis Example 3-4

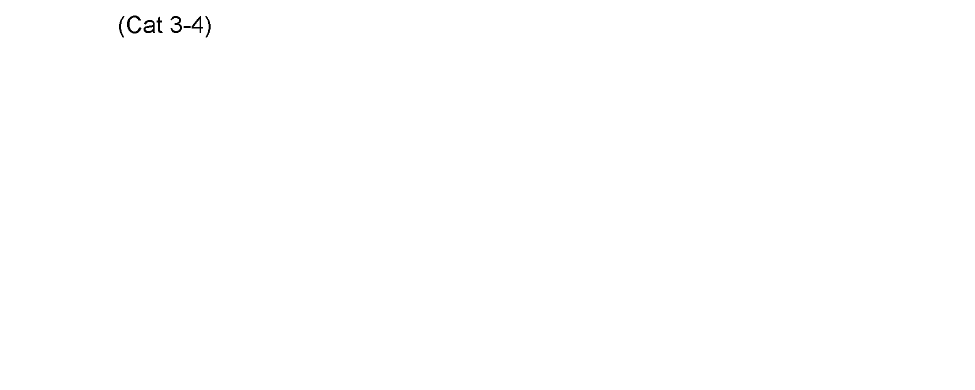

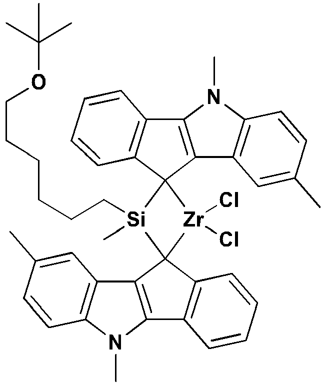

The transition metal compound of structural formula Cat 3-4 was prepared in the same manner as in Synthesis Example 2 of Korean Laid-Open Patent No. 2021-0020831.

### Synthesis Example 3-5

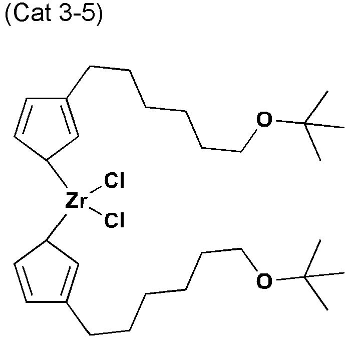

The transition metal compound of structural formula Cat 3-5 was prepared in the same manner as in Synthesis Example 3 of Korean Laid-Open Patent No. 2021-0020831.

### Synthesis Example 3-6

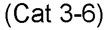

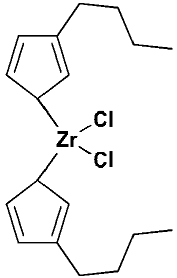

The transition metal compound of structural formula Cat 3-6 was prepared in the same manner as in Preparation Example 2 of Korean Registered Patent No. 1249995.

### Synthesis Example 3-7

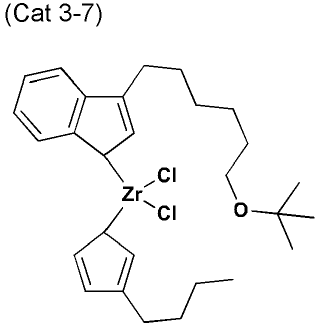

The transition metal compound of structural formula Cat 3-7 was prepared in the same manner as in Preparation Example 2 of Korean Laid-Open Patent No. 2020-0089599.

### Synthesis Example 3-8

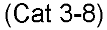

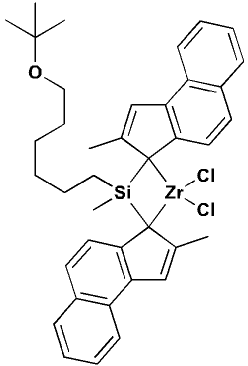

The transition metal compound of structural formula Cat 3-8 was prepared in the same manner as in Synthesis Example 3 of Korean Laid-Open Patent No. 2017-0073463.

### Synthesis Example 3-9

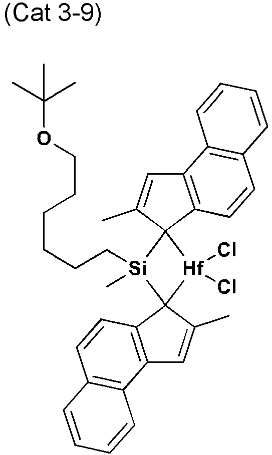

The transition metal compound of structural formula Cat 3-9 was prepared in the same manner as in Synthesis Example 4 of Korean Laid-Open Patent No. 2017-0073463.

### Synthesis Example 3-10

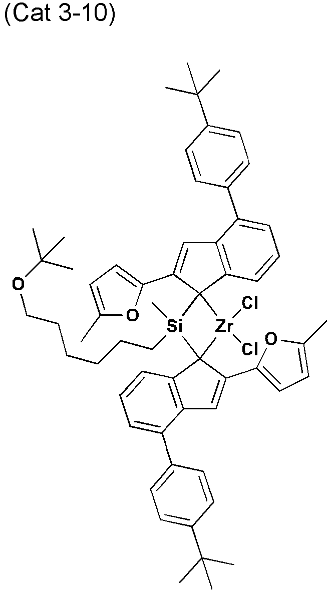

The transition metal compound of structural formula Cat 3-10 was prepared in the same manner as in Synthesis Example 5 of Korean Laid-Open Patent No. 2017-0073463.

### Synthesis Example 3-11

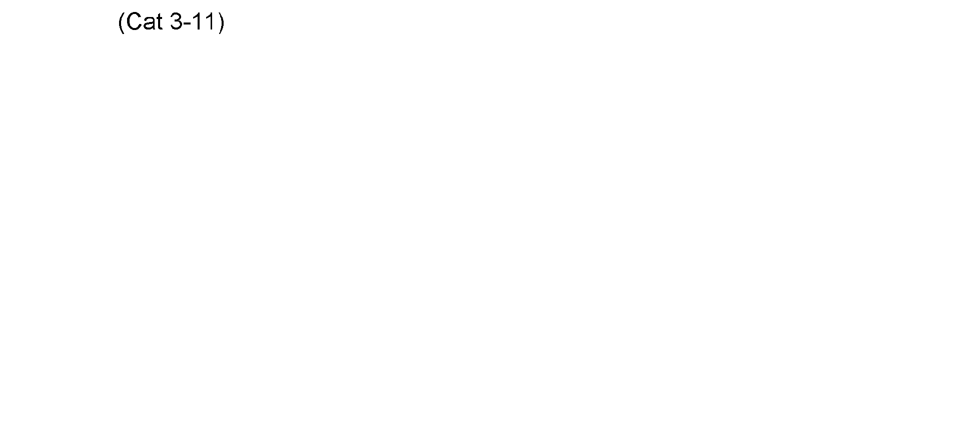

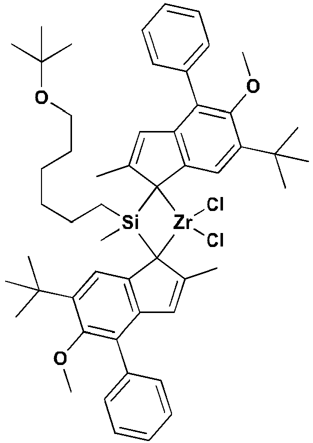

The transition metal compound of structural formula Cat 3-11 was prepared in the same manner as in Synthesis Example 6 of Korean Laid-Open Patent No. 2017-0073463.

### <Preparation of hybrid supported metallocene catalyst>

### Preparation Example 1

2.0 kg of toluene and 1000 g of silica (Grace Davison, SP2410) were added to a 20L SUS high-pressure reactor, and stirred while raising the reactor temperature to 40 °C. 5.4 kg of methylaluminoxane (10 wt% in toluene, manufactured by Albemarle) was then added to the reactor, and the temperature was increased to 70 °C. The mixture was stirred at about 200 rpm for about 12 hours. Thereafter, the reactor temperature was lowered to 40°C, and stirring was stopped. Then, the reaction product was allowed to stand for about 10 minutes, followed by decantation. Subsequently, 2.0 kg of toluene was added to the reaction product, and the mixture was stirred for about 10 minutes. Stirring was then stopped, and the mixture was allowed to stand for about 30 minutes, followed by decantation.

2.0 kg of toluene was added to the reactor, followed by 40.0 mmol of the first transition metal compound of structural formula Cat 1-1 prepared in Synthesis Example 1-1, 20.0 mmol of the second transition metal compound of structural formula Cat 2-1 prepared in Synthesis Example 2-1, and 1000 mL of toluene. The reactor temperature was increased to 85°C, and the mixture was stirred for about 90 minutes.

Thereafter, the reactor temperature was lowered to room temperature, stirring was stopped, and the reaction product was allowed to stand for about 30 minutes, followed by decantation. Subsequently, 3 kg of hexane was added to the reactor, and the hexane slurry solution was transferred to a 20L filter dryer. Then, the solution was filtered, and vacuum dried at 50°C for about 4 hours to obtain about 1.5 kg of the hybrid supported metallocene catalyst.

### Preparation Examples 2 to 14 and Comparative Preparation Examples 1 to 11

Hybrid supported metallocene catalysts were prepared in the same manner as in Preparation Example 1, except that the types of the first and second transition metal compounds were changed as listed in Table 1 below.

**[Table 1]**

| Catalyst | First transition metal compound | Second transition metal compound |
|---|---|---|
| Prep. Ex. 1 | Cat 1-1 | Cat 2-1 |
| Prep. Ex. 2 | Cat 1-1 | Cat 2-2 |
| Prep. Ex. 3 | Cat 1-1 | Cat 2-3 |
| Prep. Ex. 4 | Cat 1-1 | Cat 2-4 |
| Prep. Ex. 5 | Cat 1-1 | Cat 2-5 |
| Prep. Ex. 6 | Cat 1-1 | Cat 2-6 |
| Prep. Ex. 7 | Cat 1-1 | Cat 2-7 |
| Prep. Ex. 8 | Cat 1-1 | Cat 2-8 |
| Prep. Ex. 9 | Cat 1-1 | Cat 2-9 |
| Prep. Ex. 10 | Cat 1-1 | Cat 2-10 |
| Prep. Ex. 11 | Cat 1-2 | Cat 2-1 |
| Prep. Ex. 12 | Cat 1-3 | Cat 2-1 |
| Prep. Ex. 13 | Cat 1-4 | Cat 2-1 |
| Prep. Ex. 14 | Cat 1-5 | Cat 2-1 |
| Comp. Prep. Ex. 1 | Cat 1-4 | Cat 3-1 |
| Comp. Prep. Ex. 2 | Cat 1-4 | Cat 3-2 |
| Comp. Prep. Ex. 3 | Cat 1-4 | Cat 3-3 |
| Comp. Prep. Ex. 4 | Cat 1-4 | Cat 3-4 |
| Comp. Prep. Ex. 5 | Cat 1-4 | Cat 3-5 |
| Comp. Prep. Ex. 6 | Cat 1-4 | Cat 3-6 |
| Comp. Prep. Ex. 7 | Cat 1-4 | Cat 3-7 |
| Comp. Prep. Ex. 8 | Cat 1-4 | Cat 3-8 |
| Comp. Prep. Ex. 9 | Cat 1-4 | Cat 3-9 |
| Comp. Prep. Ex. 10 | Cat 1-4 | Cat 3-10 |
| Comp. Prep. Ex. 11 | Cat 1-4 | Cat 3-11 |

### <Production of Polyethylene>

### Examples 1 to 14 and Comparative Examples 1 to 11

A 140 L continuous polymerization reactor capable of running as an isobutene slurry loop process at a reaction flow rate of about 7 m/s was prepared. Then, reactants required for polyethylene polymerization were continuously fed into the reactor as listed in Tables 2 and 3. The catalyst used in each polymerization reaction was prepared according to Preparation Examples or Comparative Preparation Examples listed in Table 1, and was introduced into the reactor by premixing with isobutene slurry. The polymerization reaction was performed at a pressure of about 40 bar and a temperature of about 85°C.

The main conditions of the polymerization reaction are shown in Table 2.

**[Table 2]**

| | Catalyst | Ethylene input (kg/hr) | 1-Hexene input¹ (wt%) | Hydrogen input² (ppm) | Activity (kgPE/kgSiO₂·hr) |
|---|---|---|---|---|---|
| Example 1 | Prep. Ex. 1 | 25 | 12.0 | 27 | 4.3 |
| Example 2 | Prep. Ex. 2 | 25 | 14.0 | 110 | 7.6 |
| Example 3 | Prep. Ex. 3 | 25 | 14.0 | 10 | 5.1 |
| Example 4 | Prep. Ex. 4 | 24 | 13.0 | 5 | 4.4 |
| Example 5 | Prep. Ex. 5 | 20.3 | 14.0 | 135 | 3.9 |
| Example 6 | Prep. Ex. 6 | 19.8 | 14.8 | 135 | 4.1 |
| Example 7 | Prep. Ex. 7 | 20.4 | 11.5 | 275 | 4.5 |
| Example 8 | Prep. Ex. 8 | 20 | 13.5 | 38 | 3.4 |
| Example 9 | Prep. Ex. 9 | 20.2 | 13.5 | 114 | 4.0 |
| Example 10 | Prep. Ex. 10 | 17.8 | 14.2 | 112 | 3.7 |
| Example 11 | Prep. Ex. 11 | 19.3 | 14.0 | 28 | 1.4 |
| Example 12 | Prep. Ex. 12 | 21 | 14.4 | 165 | 1.5 |
| Example 13 | Prep. Ex. 13 | 28.1 | 14.2 | 154 | 1.9 |
| Example 14 | Prep. Ex. 14 | 20.1 | 14.6 | 348 | 4.9 |
| Comp. Example 1 | Comp. Prep. Ex. 1 | 24.5 | 12.5 | 20 | 3.2 |
| Comp. Example 2 | Comp. Prep. Ex. 2 | 19.8 | 12.0 | 101 | 4.2 |
| Comp. Example 3 | Comp. Prep. Ex. 3 | 19.8 | 11.7 | 67 | 4.3 |
| Comp. Example 4 | Comp. Prep. Ex. 4 | 20 | 11.5 | 100 | 3.2 |
| Comp. Example 5 | Comp. Prep. Ex. 5 | 20.1 | 12.0 | 38 | 2.0 |
| Comp. Example 6 | Comp. Prep. Ex. 6 | 20 | 8.3 | 30 | 2.0 |
| Comp. Example 7 | Comp. Prep. Ex. 7 | 20 | 9.4 | 75 | 2.7 |
| Comp. Example 8 | Comp. Prep. Ex. 8 | 23 | 13.5 | 48 | 2.5 |
| Comp. Example 9 | Comp. Prep. Ex. 9 | 22 | 13.4 | 70 | 2.1 |
| Comp. Example 10 | Comp. Prep. Ex. 10 | 21.1 | 9.5 | 16.5 | 1.8 |
| Comp. Example 11 | Comp. Prep. Ex. 11 | 19 | 11.0 | 64 | 2.6 |

In Table 2, the activity (kgPE/kgSiO₂·hr) was calculated as the weight of polymer produced (kg PE) per kilogram of supported catalyst used per hour.

In addition, the 1-hexene input (wt%) was calculated as a percentage of the amount of 1-hexene fed based on the total weight of monomers including ethylene and 1-hexene. The hydrogen input (ppm) was also calculated based on the total weight of monomers including ethylene and 1-hexene.

### <Experimental Examples>

The physical properties of the polyethylene prepared in Examples and Comparative Examples were measured as follows, and the results are shown in Table 3 below.
(1) Density (density, g/cm³)
It was measured according to ASTM D1505 standard.
(2) Melt Index (MI_{2.16})
It was measured according to ISO 1133 (190°C, 2.16kg load) standard.
(3) Melt Flow Rate Ratio (MI_{21.e}/MI_{2.16})
MI_{21.6} was measured at a temperature of 190°C under a load of 21.6kg according to ISO 1133, MI_{2.16} was measured at a temperature of 190°C under a load of 2.16kg according to ISO 1133, and MFRR was calculated by dividing MI_{21.6} by MI_{2.16}.
(4) Haze (%)
The degree of light scattering (%) was measured by irradiating a 1 cm-thick specimen with light in accordance with ASTM D1003. The haze was calculated as Td (scattered light)/Tt (total transmitted light) × 100 (%).
(5) Extrusion pressure (processing load, bar)
It was measured using a Haake extruder under the condition of cylinder-1/- 2/-3/die = 180/185/185/190 and at a speed of 40 rpm.

**[Table 3]**

| | Density (g/cm³) | MI₂.₁₆ (g/10min) | MFRR (MI_{21.6}/MI₂.₁₆) | Extrusion pressure (bar) | Haze (%) |
|---|---|---|---|---|---|
| Example 1 | 0.919 | 0.6 | 47.60 | 172 | 8.9 |
| Example 2 | 0.9202 | 0.79 | 45.89 | 174 | 9.5 |
| Example 3 | 0.9198 | 0.6 | 43.50 | 185 | 7.9 |
| Example 4 | 0.9198 | 0.3 | 53.10 | 160 | 9.0 |
| Example 5 | 0.9244 | 1.06 | 50.08 | 160 | 7.8 |
| Example 6 | 0.9211 | 1.07 | 46.73 | 181 | 8.0 |
| Example 7 | 0.9212 | 1.25 | 45.30 | 174 | 8.0 |
| Example 8 | 0.9160 | 0.42 | 48.00 | 169 | 8.3 |
| Example 9 | 0.9195 | 1.15 | 45.54 | 178 | 9.4 |
| Example 10 | 0.9191 | 1.44 | 46.63 | 169 | 8.2 |
| Example 11 | 0.9253 | 0.97 | 49.64 | 168 | 7.5 |
| Example 12 | 0.9260 | 0.93 | 48.25 | 164 | 7.2 |
| Example 13 | 0.919 | 0.87 | 52.00 | 164 | 7.8 |
| Example 14 | 0.9179 | 0.56 | 63.53 | 156 | 8.5 |
| Comp. Example 1 | 0.9173 | 1.14 | 26.70 | 245 | 20.0 |
| Comp. Example 2 | 0.9171 | 1.15 | 26.00 | 230 | 14.2 |
| Comp. Example 3 | 0.9177 | 0.59 | 27.90 | 242 | 21.2 |
| Comp. Example 4 | 0.9189 | 1.14 | 26.74 | 258 | 15.3 |
| Comp. Example 5 | 0.9163 | 0.83 | 22.34 | 261 | 16.3 |
| Comp. Example 6 | 0.9180 | 0.6 | 22.98 | 228 | 15.8 |
| Comp. Example 7 | 0.9201 | 1.1 | 27.51 | 242 | 18.5 |
| Comp. Example 8 | 0.9166 | 0.70 | 25.88 | 251 | 21.9 |
| Comp. Example 9 | 0.9254 | 0.99 | 25.56 | 240 | 22.6 |
| Comp. Example 10 | 0.9185 | 0.88 | 21.89 | 244 | 16.2 |
| Comp. Example 11 | 0.9250 | 0.92 | 24.63 | 259 | 31.1 |

As shown in Table 3, the polyethylene of Examples, which was prepared using a hybrid supported metallocene catalyst including a first transition metal compound represented by Chemical Formula 1 and a second transition metal compound represented by Chemical Formula 2 in accordance with the present invention, exhibited excellent processability and transparency due to its low extrusion pressure, while also showing high density, high MFRR, and high transparency. These properties result from the combination of the high copolymerization in the high molecular weight region imparted by the first transition metal compound and the high copolymerization in the low molecular weight region imparted by the second transition metal compound.

On the other hand, the polyethylene of Comparative Examples, which was prepared using a hybrid supported metallocene catalyst including the transition metal compounds of Comparative Preparation Examples, exhibited significantly inferior processability and transparency compared to the polyethylene of Examples, due to its higher extrusion pressure and haze.

## Claims

1. A hybrid supported metallocene catalyst, comprising
a first transition metal compound represented by the following Chemical Formula 1;
a second transition metal compound represented by the following Chemical Formula 2;
a cocatalyst; and
a support: 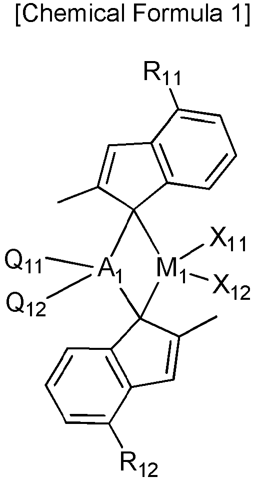
in Chemical Formula 1,
M₁ is a Group 4 transition metal,
X₁₁ and X₁₂ are each independently C₁₋₂₀ alkyl or halogen,
A₁ is carbon, silicon, or germanium,
R₁₁ and R₁₂ are each independently C₆₋₂₀ aryl, C₇₋₂₀ alkylaryl, C₇₋₂₀ arylalkyl, or C₇₋₂₀ alkoxyaryl, and
one of Q₁₁ and Q₁₂ is C₂₋₂₀ alkoxyalkyl, and the other is C₁₋₂₀ alkyl, 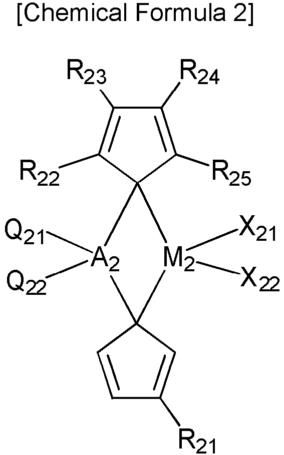
in Chemical Formula 2,
M₂ is a Group 4 transition metal,
X₂₁ and X₂₂ are each independently C₁₋₂₀ alkyl or halogen,
R₂₁ is hydrogen, C₁₋₂₀ alkyl, or C₂₋₂₀ alkoxyalkyl,
R₂₂ to R₂₅ are each independently hydrogen, C₁₋₂₀ alkyl, C₆₋₂₀ aryl, C₇₋₂₀ alkylaryl, or C₇₋₂₀ arylalkyl,
Q₂₁ and Q₂₂ are each independently C₁₋₂₀ alkyl or C₂₋₂₀ alkoxyalkyl, and
one or more of Q₂₁, Q₂₂ and R₂₁ is C₂₋₂₀ alkoxyalkyl.

2. The hybrid supported metallocene catalyst of Claim 1,
wherein M₁ is zirconium (Zr), and
X₁₁ and X₁₂ are each independently halogen.

3. The hybrid supported metallocene catalyst of Claim 1,
wherein A₁ is silicon, and
any one of Q₁₁ and Q₁₂ is an alkoxyalkyl group of -(CH₂)ₙ-Rₐ (wherein Rₐ is a C₃₋₆ branched alkoxy group, and n is an integer of 2 to 10), and the other is C₁₋₄ alkyl.

4. The hybrid supported metallocene catalyst of Claim 1,
wherein R₁₁ and R₁₂ are each independently C₆₋₂₀ aryl or C₇₋₂₀ alkylaryl.

5. The hybrid supported metallocene catalyst of Claim 1,
wherein R₁₁ and R₁₂ are each independently phenyl, naphthyl, methylphenyl, ethylphenyl, n-propylphenyl, iso-propylphenyl, n-butylphenyl, iso-butylphenyl, tert-butylphenyl, or di-tert-butylphenyl.

6. The hybrid supported metallocene catalyst of Claim 1,
wherein the first transition metal compound is any one selected from the group consisting of the following compounds:

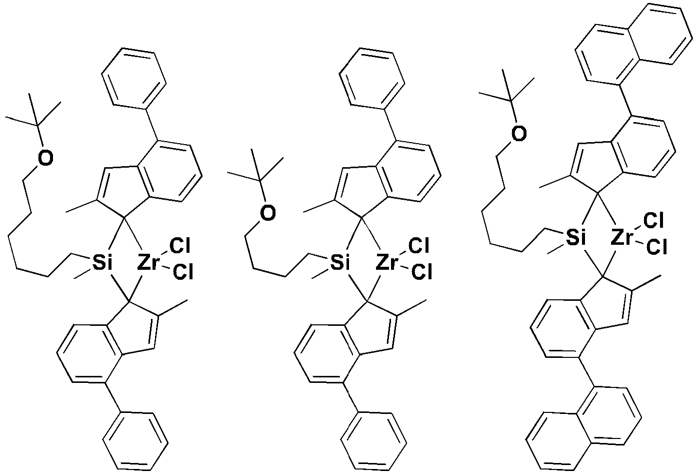

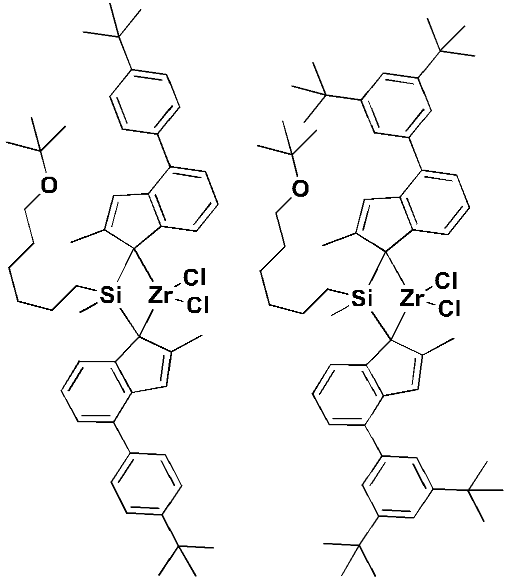

7. The hybrid supported metallocene catalyst of Claim 1,
wherein M₂ is zirconium (Zr), and
X₂₁ and X₂₂ are each independently halogen.

8. The hybrid supported metallocene catalyst of Claim 1,
wherein A₂ is silicon, and
one or more of Q₂₁, Q₂₂, and R₂₁ is alkoxyalkyl of -(CH₂)ₙ-R_{b} (wherein R_{b} is a C₃₋₆ branched alkoxy group, and n is an integer of 2 to 10).

9. The hybrid supported metallocene catalyst of Claim 1,
wherein R₂₂ to R₂₅ are each independently hydrogen, C₁₋₆ alkyl, or C₆₋₁₀ aryl.

10. The hybrid supported metallocene catalyst of Claim 1,
wherein the second transition metal compound is any one selected from the group consisting of the following compounds:

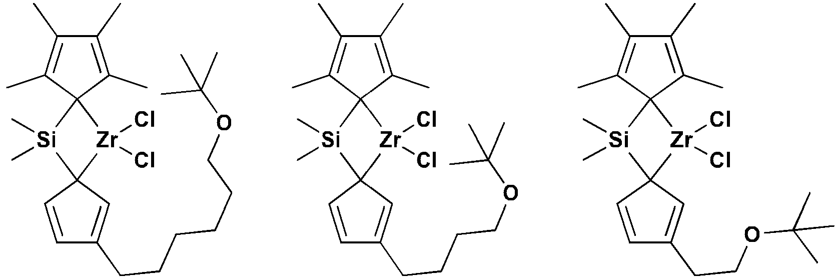

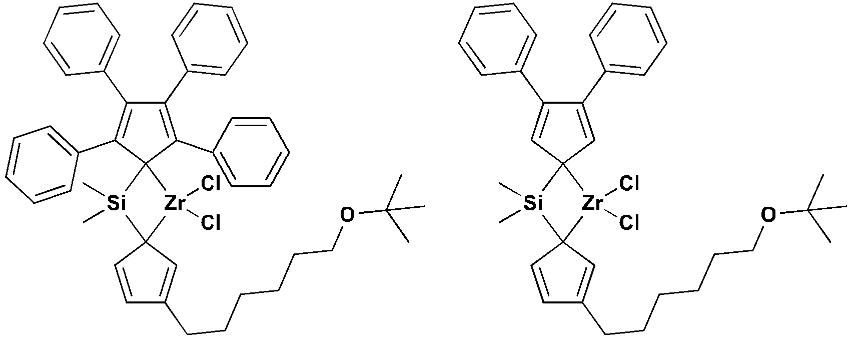

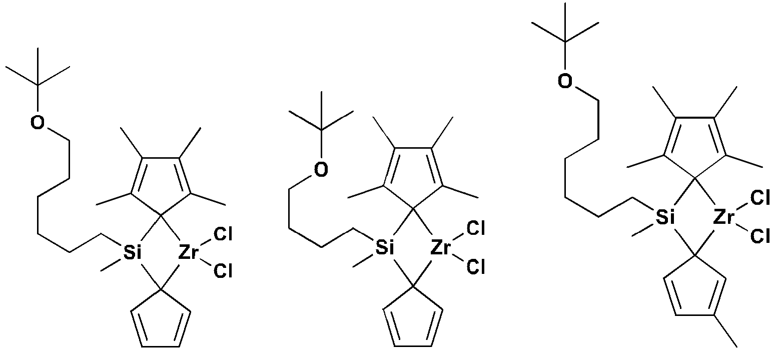

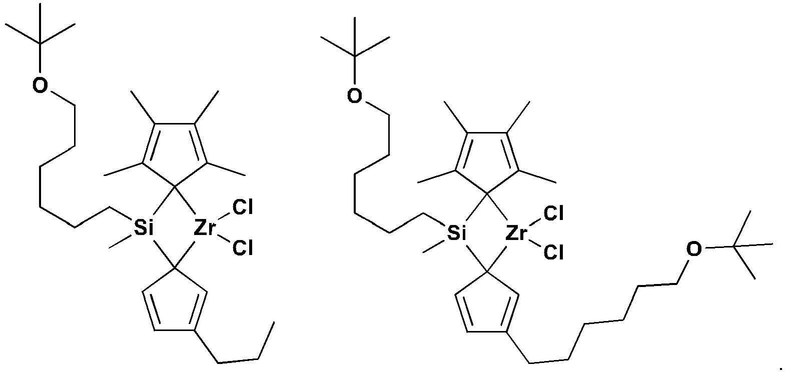

11. The hybrid supported metallocene catalyst of Claim 1,
wherein the first transition metal compound and the second transition metal compound are included in a molar ratio of 1:10 to 10:1.

12. The hybrid supported metallocene catalyst of Claim 1,
wherein the cocatalyst is one or more selected from the group consisting of compounds represented by the following Chemical Formula 3:
[Chemical Formula 3] -[Al(R₄₁)-O]a-
in Chemical Formula 3,
R₄₁ is halogen; or halogen-substituted or unsubstituted C₁₋₂₀ hydrocarbyl; and
a is an integer of 2 or more.

13. The hybrid supported metallocene catalyst of Claim 1,
wherein the support comprises silica, alumina, magnesia, or a mixture thereof.

14. A method for preparing a polyethylene, comprising a step of polymerizing an ethylene monomer and an alpha-olefin based monomer in the presence of the hybrid supported metallocene catalyst according to Claim 1, while introducing hydrogen.

15. The method for preparing a polyethylene of Claim 14,
wherein the alpha-olefin based monomer is introduced in an amount of 5 to 20 wt% based on a total weight of monomers comprising the ethylene monomer and the alpha-olefin based monomer, and
the hydrogen is introduced in an amount of 5 to 500 ppm based on a total weight of monomers comprising the ethylene monomer and the alpha-olefin based monomer.

16. The method for preparing a polyethylene of Claim 14,
wherein the alpha-olefin based monomer is 1-butene, 1-hexene, or 1-octene.
